# EUROPEAN PATENT APPLICATION

(11) **EP 0 702 309 A1**
(43) Date of publication of application: **20.03.1996**
(21) Application number: 95610038.2
(22) Date of filing: 22.06.1995
(51) Int. Cl.: G06F 17/00, G06F 17/30

(54) **A computerized image displaying system, a data carrying medium for use in a computerized displaying system, and a method of displaying images**

(30) Priority: 24.06.1994 DK 760/94
(71) Applicant: Aarhuus Stiftsbogtrykkerie S.M.B.A., DK-8270 Hoejbjerg (DK)
(72) Inventor: Frandsen, Peter, DK-8000 Aarhus C. (DK); Kajhoej, Michael, DK-8230 Aabyhoej (DK)
(74) Representative: Nielsen, Henrik Sten

(57) **Abstract**

A computerized image displaying system comprises a data carrying medium including first data representing a plurality of images, and second data identifying the plurality of images and including cross-reference data, reader means for receiving the data carrying medium and for reading the first and second data therefrom, a display means for displaying images, and a processor means. The processor means communicates with the reader means and displaying means and includes a user operable control means allowing the user to control the displaying of the images generated from the first data input from the data carrying medium to the processor means and to organize the displaying of the images in a sequence including a set of images among the plurality of images, as the set of images of the sequence is identified through the cross-reference data of the second data input from the data carrying medium to the processor means.

## Description

The present invention relates to a computerized image displaying system, a data carrying medium for use in a computerized image displaying system, and a method of displaying images.

The modern digital technology, computer technology and multi media technology have provided possibilities of presenting information including stationary images and moving pictures in a variety of new areas, in particular within the field of presenting information to one or more individuals in the present context described as the user or the users. Most often the presentation of the information is a passive process in which the user or the users participate only by initially activating the information presentation system such as pressing a turn-on button or the like whereupon the information is presented to the user or users which information may comprise sounds and pictures including speach, and music and stationary or movable images, respectively. The information may originally be present in digital form as data and converted from data into sounds or pictures by means of appropriate converters such as digital/analogue converters for providing the sound and RGB or YCMB generators for generating stationary or moving pictures or images from the data representing the sounds and the pictures, respectively.

Within numerous fields, printed catalogues, telephone directories or similar books have been used for presenting organized written and pictorial information to a user, e.g. for rendering it possible for the user to order specific goods or articles from a supplier, for requesting specific components from a store, or for finding information concerning such goods and suppliers. The socalled microfilm technique has within the last decades gained extensive success allowing a decentral presentation of an extensive amount of information such as pictures, reference numbers etc. referring to specific items etc. Within hospitals, microfilm apparatuses along with computers have been used extensively for at least a decade allowing the staff of the hospital to gain information concerning the supply of medicine, equipment and also the patients which are hospitalized or are about to be hospitalized.

The novel multi media technique has obtained a tremendous success and has hitherto been used basically for improving the quality of the presentation of the prior art information rather than providing novel applications of elaborated presentation of information within new areas or fields.

Numerous references describe the application of computerized information presentation systems such as EP 0 460 869, US 4 768 766, US 4 789 147, US 4 908 759, US 5 117 349, US 5 146 548, US 5 179 652, US 5 181 162, US 5 182 705 and US 5 241 671.

An object of the present invention is to provide a novel technique rendering it possible to allow an indivial to select a specific compilation of information from a major information source.

A further object of the present invention is to provide a novel technique rendering it possible to allow different individuals to establish and provide information from the same information source on an individual and personal basis, i.e. determined by the individual in question exclusively for fulfilling the requirements specified by the individual in question.

An advantage of the present invention relates to the fact that the novel technique according to the present invention renders it possible to employ a conventional multidata containing information carrier for presenting individualized information to one or more individuals or users.

A particular feature of the present invention relates to the fact that an individualized presentation of specific information which the user wants to obtain may be generated from a multiinformation carrying medium such as a compact disc including data representing the information which presentation of the information may be reproduced in the same order of presenting the information or be amended for complying with specific requirements determined by the individual user concerning the presentation of the information which the individual user considers to be relevant.

In the present context, the terms "information" and "images" are widely used as synonymous terms as information mainly comprising pictures and associated data, such as stationary pictures or moving pictures and optionally also speach or music accompanying the presentation of the stationary or moving pictures or images and related text.

The above objects, the above advantage and the above feature together with numerous other objects, advantages and features, which will be evidient from the below detailed description of presently preferred embodiments of the present invention are according to the present invention obtained by a computerized image displaying system, comprising:
i. a data carrying medium including first data representing a plurality of images and associated data, and second data identifying the plurality of images and associated data and including cross-reference data,
ii. reader means for receiving the data carrying medium and for reading the first and second data therefrom,
iii. a display means for displaying images and associated data, and
iv. a processor means communicating with the reader means and the displaying means and including a user operable control means allowing the user to control the displaying of the images and associated data generated from the first data input from the data carrying medium to the processor means by means of the reader means and output to the displaying means for displaying thereon and to organize the displaying of the images and associated data in a sequence including a set of images and associated data among the plurality of images and associated data, the set of images and associated data of the sequence being identified through the cross-reference data of the second data input from the data carrying medium to the processor means by means of the reader means.

According to the basic teaching of the present invention, the data which are kept by the data carrying medium contain two sets of data defined as first data and second data which first data represent the information itself and which second data identify the information and also include relevant cross-reference data allowing the user to organize the sequence of presentation of the information, i.e. the sequence of images by simply sequencing the images on the basis of the cross-reference data compiling the images from the first data in accordance with the cross-reference data selected by the user.

In the present context, the term "cross-reference" is to construed a generic term which may be defined as a series of different image ID's, all referencing the image and the associated data in question. Thus, the cross-references define a series of parameters or characteristics through which images and associated data may be identified.

In the present context, the term "image and associated data" is to be construed a generic term which in certain applications refer to a pictorial presentation of information on a screen, or alternatively and preferably refer to a part of a display on a screen or a screen window. Thus, according to the user's preferences, the presentation of a specific image may be combined with the presentation of additional images which are associated through specific cross-reference data in accordance with a specific layout of the displaying of the images. The data associated with the image, or images, may also be presented in the displaying as the data may represent textual information to be displayed on the screen along with the image.

The present invention is believed to be applicable within numerous fields such as e.g. within the field of ordering items from e.g. warehouses, retailers or suppliers of components or goods, for looking up information in electronic directories, or within hospitals, allowing the doctors and nurses to gain information concerning e.g. the persons hospitalized within a specific section, the supply of medication, the amount of a specific medication or product kept by the hospital, the relevant store of equipment etc., and numerous other technical fields which will be evident to a person having ordinary skill in the art.

The reader means of the computerized image displaying system according to the present invention may constitute a local or a remotely located reader means relative to the processor means which is used by the user. Also the processor means may constitute a local processor means such as a personal computer or a terminal of a large computer system or a terminal or a personal computer of a network including a plurality of computer systems and personal computers in which a single or a multitude of readers such as compact disc players, hard discs, tape stations etc. are provided for presenting the data to the processor means which is operated by the user. In order to obtain a swift organization of the sequence of images to be presented to the user, the processor means further preferably comprises a storage means for storing the first and second data input to the processor means from the data carrying medium by means of the reader means. Alternatively, the processor means may operate in an on-line configuration in which the first and second data are input from the reader means and processed by the processor means in accordance with the user's control of the processor means by means of the user operable control means.

The processor means may as stated above constitute a personal computer or a work station of a computer system, e.g. a McIntosh or Unix work station, or constitute a processor of a audio visual system, e.g. a PC controlling the audio visual system. According to a presently preferred embodiment of the computerized image displaying system according to the present invention, the processor means is constituted by a personal computer comprising a central processing unit (CPU) and a keyboard and a mouse constituting the user operable control means.

As stated above, the information which according to the above indication is considered synonymous with the term image may further comprises sounds such as speach and underlying music, and the computerized image displaying system according to the present invention consequently further according to the presently preferred embodiment of the computerized image displaying system comprises sound generating means, as the first data further also represent sounds to be generated by the sound generating means and as the processor means communicates with the sound generating means for causing the sound generating means to generate sounds from the first data in accordance with the displaying of the set of images of the sequence. The sound generating means may as is evident to a person having ordinary skill in the art be constituted by e.g. D/A converter.

The data carrying medium may as stated above be constituted by any data carrying medium such as an optical readable data carrying medium or a magnetic data storing medium, such as a laser disc, a compact disc, a magnetic hard disc or a magnetic tape, respectively, or a combination thereof.

Depending on the specific type of the data carrying medium, the reader means may be constituted by a compact disc reader, a laser disc reader, a magnetic hard disc reader, or a magnetic tape station such as a video tape station or a combination thereof. However, according to a presently preferred embodiment of the computerized image displaying system according to the present invention, the system is a compact disc based system as the data carrying medium is constituted by either a compact disc or a combination of a compact disc and a hard disc and as the reader means is constituted by either a compact disc reader or a combination of a compact disc reader and a hard disc reader.

The displaying means may according to different embodiments of the computerized image displaying system according to the present invention be constituted by a computer screen or a video display unit such as a LCD screen (Liquid Crystal Display) or a CRT (Cathode Ray Tube) or a computer or video or TV-set.

The above objects, the above advantage and the above feature together with numerous other objects, advantages and features which will be evident from the below detailed description of presently preferred embodiments of the present invention are according to a further aspect of the present invention obtained by a data carrying medium for use in a computerized image displaying system,
the data carrying medium including first data representing a plurality of images, and second data identifying the plurality of images and associated data and including cross-reference data,
the computerized image displaying system comprising:
i. reader means for receiving the data carrying medium and for reading the first and second data therefrom,
ii. a display means for displaying images, and
iii. a processor means communicating with the reader means and the displaying means and including a user operable control means allowing the user to control the displaying of the images generated from the first data input from the data carrying medium to the processor means by means of the reader means and output to the displaying means for displaying thereon and to organize the displaying of the images in a sequence including a set of images among the plurality of images, the set of images of the sequence being identified through the cross-reference data of the second data input from the data carrying medium to the processor means by means of the reader means.

The data carrying medium according to the above aspect of the present invention may comprise any of the features of the data carrying medium of the computerized image displaying system described above.

The above objects, the above advantage and the above feature together with numerous other objects, advantages and features which will be evident from the below detailed description of presently preferred embodiments of the present invention are according to a still further aspect of the present invention obtained by a method of displaying images, comprising:
providing a data carrying medium including first data representing a plurality of images, and second data identifying the plurality of images and associated data and including cross-reference data,
providing a computerized image displaying system comprising:
i. reader means for receiving the data carrying medium and for reading the first and second data therefrom,
ii. a display means for displaying images, and
iii. a processor means communicating with the reader means and the displaying means and including a user operable control means,

inputting the data carrying medium into the reader means,
reading the first and second data from the data carrying medium,
inputting the first and second data into the processor means, and controlling the displaying of the images generated from the first data input from the data carrying medium and output to the displaying means for displaying thereon by organizing the displaying of the images in a sequence including a set of images among the plurality of images, the set of images of the sequence being identified through the cross-reference data of the second data input from the data carrying medium to the processor means by means of the reader means.

The method of displaying images according to the above aspect of the present invention may comprise any of the features of the computerized image displaying system and the data carrying medium of the computerized image displaying system described above.

The invention will now be further described with reference to the drawings, in which
Fig. 1 is an overall schematic view of a presently preferred embodiment of the computerized image displaying system according to the present invention,
Fig. 2 is a schematic view illustating the image compilation technique of the present invention,
Fig. 3 is a block diagrammatic view of the computerized image displaying system with its cross-references according to the present invention,
Fig. 4 is a schematic view illuatrating a main interface window,
Fig. 5 is a schematic view illustrating a stardard search window,
Fig. 6 is a schematic view illustrating a Virtual Page™,
Fig. 7 is a schematic view illustrating a product window,
Fig. 8 is a schematic view illustrating an advanced search window,
Fig. 9 is a schematic view illustrating a heading of a search window, and
Fig. 10 is a schematic view illustrating an order form.

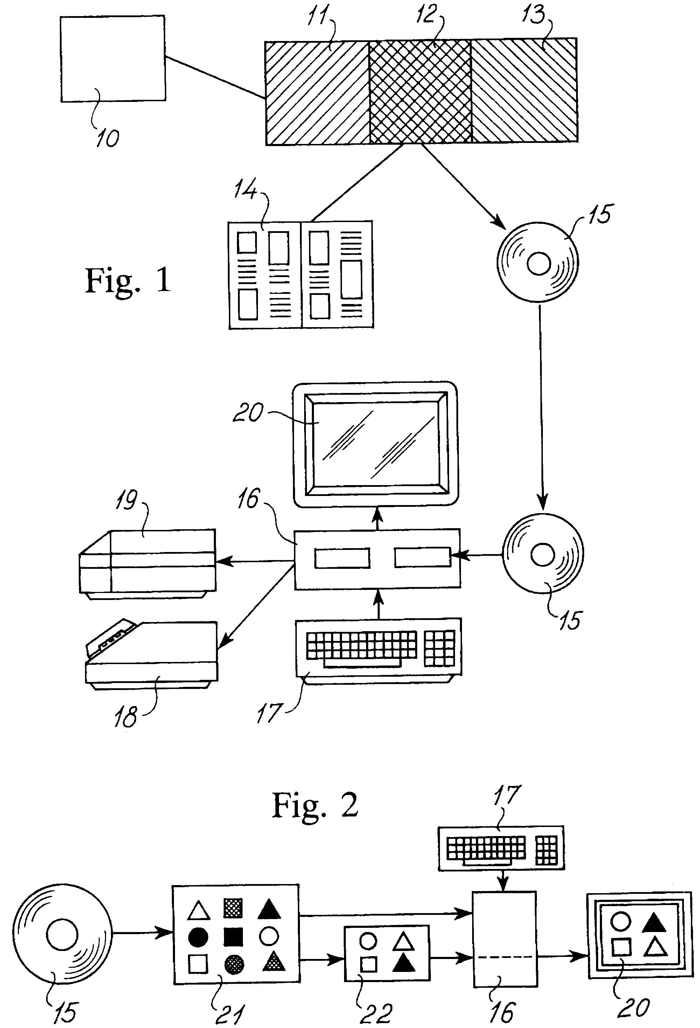

In Fig. 1, an overall schematic view of a presently preferred embodiment of a computerized image displaying system according to the present invention is shown. The computerized image displaying system generally comprises a central computer constituted by a personal computer including a central processing unit (CPU) 16 communicating with a keyboard 17, a fax or modem unit 18, and a printer 19 such as a laser printer, ink jet printer or the like. The central processing unit 16 is adapted to receive data input from a compact disc by means of a compact disc reader not shown in Fig. 1 which data comprise first and second data in accordance with the teachings of the present invention which first data represent images and optionally sound to be presented by the display 20 and a loudspeaker constituting an integral part of the central processing unit 16 of the personal computer, respectively. The second data constitutes identification and cross-reference data as will be described below with reference to a detailed discussion of an electronic catalogue. The compact disc 15 is generated from a library constituting three sections 11, 12 and 13. The library 11, 12, 13 is updated from a computer system 10 and is updated as will be described below for providing a printed catalogue 14 and also the compact disc 15 constituting an electronic catalogue. In an alternative embodiment, the personal computer communicates with alternative PCs in a network including a server and receives from and supplies data to other PCs through the network and the server. Thus, the PC may receive data from e.g. a hard disc or a compact disc located at a different PC of the network. Further alternatively, the PC may constitute an element of a large computer network including one or more main-frames, PCs and work stations.

In Fig. 2, an overall schematic view of the individual image compilation technique characteristic of the present invention is illustrated as the data constituting the first data output from the compact disc 15 is illustrating by a block 21 including schematic symbols which according to the image compilation technigue and image sequencing technique according to the present invention is combinable into a specific sequence of images as illustrated in a block 22 or alternatively is output in a complete or full text presentation to the central processing unit 16 which is controlled by the user by means of the keyboard 17.

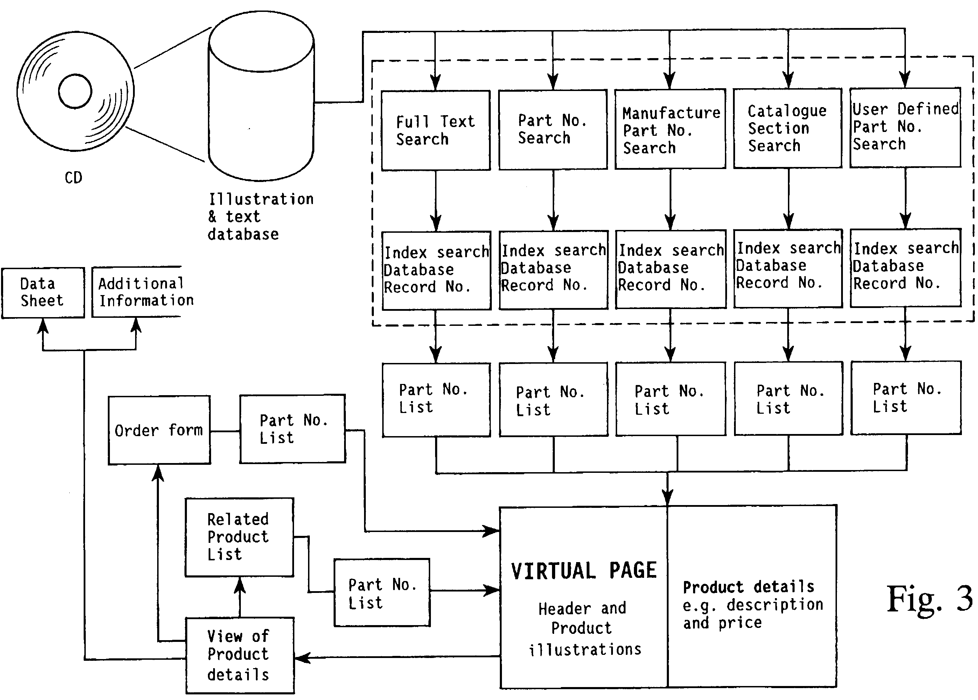

In Fig. 3, a block diagrammatic view of the electronic catalogue according to the present invention is shown which block diagrammatic view illustrates the composition of the program and the method of individual composing, sequencing and compiling images to be presented in accordance with a specific user's requirement. In Fig. 3, the cross-reference data characteristic of the present invention are included in a dotted line block.

The technique of individual presenting, compiling and sequencing images which may constitute stationary pictures or moving pictures optionally combined with sounds such as speach or music allow an individual or user specified presentation of the information or the images which the user wants to be presented to for e.g. determining which products are to be purchased within a specific range of products, which products could be relevant for further consideration, which products are included in a current stock, which vendors may offer a given service, etc.

### The concept of the Electronic Catalogue

Below, a preferred embodiment of the system according to the present invention is to be described with reference to the basic functions of a multimedia based version of an Electronic Catalogue (EC).

The concept in developing an EC is creation of a means which is believed to have a certain appeal to the user, and to make it more easy to the user to identify the relevant products and/or services. Consequently, the EC contains product and/or vendor data presented to the user in a manner that enables window shopping for comparable products and/or services to facilitate the sales process and support easy placing of orders and/or selection of services.

The main benefit of working with data in an electronic form is the possibility of efficiently selecting the pertinent products and/or services that are relevant in a certain situation. However, the degree of success of the EC depents on how well the two terms "efficiently selecting" and "relevant" are understood and implemented. Therefore these two basic features comprise the corner stone of the system, and thus they will be discussed throughout, but from several points of view.

The aim of the EC is not to develop an electronic version of the printed catalogue. The EC application instead provides a multitude of ways to find, view and order any product and/or services or group of products and/or services that are of interest to the user.

### The Hardware Demands of the System

The EC is built to accomodate a minimal but expandable hardware demand and is based on a personal computer (PC). The sytem is designed to make the user using the EC decide the speed and quality on a cost-benefit basis.

The EC runs in the framework of MS Windows version 3.1 and thus, demand the minimum Windows configuration.

One of the benefits gained using Windows is the encapsulation of hardware meaning that a particular program in Windows communicates with a device driver rather than with the actual hardware. This is reflected in the list below in which the main demands of the system are listed.

### Monitor and video adapter:

The EC does not place any unbreakable restrictions in the choise of monitor and video adapter. It is suggested to use at least a SVGA video adapter with matching colour/grey-scale monitor in order to get an acceptable visual performance.

### CPU:

The EC runs with a 20 MHz 80386 CPU as an absolute minimum. However, the multimedia system controls a number of CPU intensive tasks making it feasible to demand at least a 33 MHz 80486 CPU to ensure an acceptable speed of performance. Processes like image decompression, full-text search, animation and live video display are especially CPU demanding.

### Memory:

The EC runs with 4 MB RAM. A RAM extension makes Windows work more efficiently and thus quicker.

### Hard disc:

It is possible to run the EC directly from the CD-ROM not demanding any significant hard disc space. However, the EC gives the opportunity to install various parts of the CD-ROM on free hard disc space. This option is offered seen in light of the fact that the operation of the CD-ROM device is slow compared to an average hard disc device. The MS Windows itself must be installed on the hard disc.

### CD-ROM drive:

The CD-ROM has a storage capacity of approximately 650 MB. Data desired for storage consist of 3 main groupings; catalogue data, extra product information, and video presentations. The catalogue data require about 300 MB and the product information 280 MB leaving only 70 MB for video presentations. A detailed breakdown of the storage usage is presented in enclosure 1.

### Mouse:

A mouse supported in Windows is needed.

### Fax-modem:

A standard fax-modem compatible with the later chosen software may be used for submitting orders directly via fax.

### Sound:

The internal loudspeaker of the PC is used.

### Video:

The display of live video is very sensitive to bottlenecks in CPU power and transmission speed from the CD-ROM (or from the hard disc). Today software standards like Video for Windows® and Apple QuickTime® for Windows offers software display of live video. The quality depends on CPU, disc I/O , video adapter and monitor. These approaches use extensive image compression typically giving a data reduction of a factor 50 or more.

The compression technique has advantages as well as disadvantages. The advantages are basically a reduced storage need and a quicker transmission from the disc. The disadvantages are mainly an intensive decompression and loss of quality. Thus, a compromise has to be found between:
* Storage requirement on the CD-ROM
* Transfer speed from the CD-ROM
* Number of frames per second acceptable
* The quality of each frame
* The size of the video display window

It is as mentioned above recommended to use at least a 33 MHz 80486 CPU in order to gain an acceptable video display. Preferably, a video-booster card is used providing superior video display.

Using modern standard software like QuickTime® approximately 70 minutes of video presentation may be obtained from a full CD.

The system architecture is highly flexible.

### The Search System

The EC holds a huge amount of textual data. This data must be available to the user or users in a fast and flexible way with as few restrictions as possible. The implication of this is a need for a text search system.

The text search system forming the core of the textual retrieval functionality has to comply with the following consideration:

The search system must have a very powerful and flexible text search capability.

The text search system has to be able to perform a text search spanning of an EC within a very short period of time, such as a few 10th of a second depending on the speed of the hard disc.

### Specifications for EC

### Customer Interface

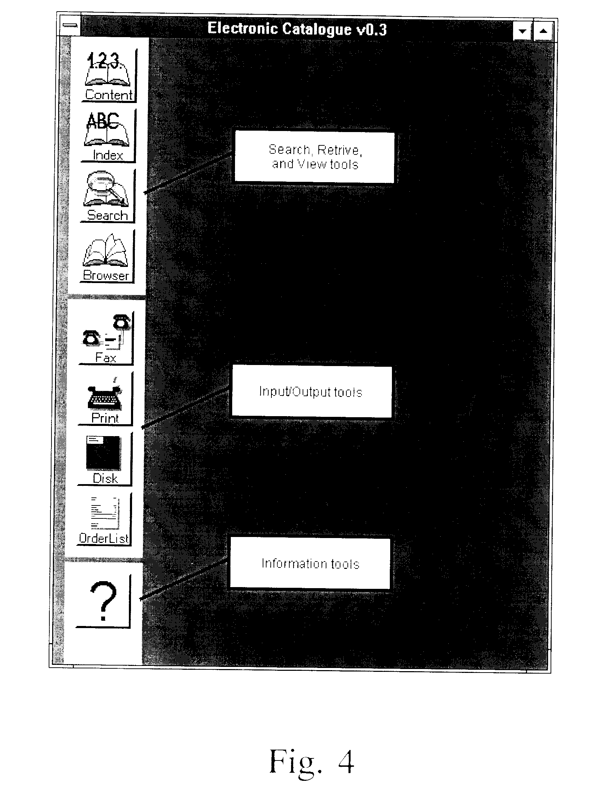

The design of the system's user interface is straightforward and is designed to be easily understandable. A main interface window is shown in Fig. 4 and presents a wording area and a number of push buttons which comprise a toolbar. Each button in the toolbar visualized an underlying function or application which is activated when the button is "pushed" by or activated by means of the mouse.

The buttons of the toolbar are divided into three groups according to their functionality.

The first group (Search, Retrieve and View) of buttons provides the user access to search, retrieve and view the products in the EC. These are the basic tools that control how the user can find and view the data.

The second group (Input/Output) of buttons enables the user to undertake external communication from the EC system. Among other, this involves placing of purchase order over the telephone network, and printing of established purchase orders.

The third group (Information) enables the user to access various "other" information. This consists of three subjects, general user information and help information in the use of the EC and new product information.

The main interface is the visual part of the EC through which the users access and interact with the product and/or service information data stored in the system. The product data consist of all the text, images, tables etc. that all together describe the product as in a printed catalogue. In the EC, however, product data are held as individual elements which enable the user to view the data items that are relevant in a desired context. Furthermore, the EC provides the users with additional information which is unavailable in the printed catalogue. E.g. product descriptions at stock number level, user-defined notes and comments, manufacturer's notes etc. are supported in the EC.

### Search and Retrieve functions

Although printed catalogues have proven their value in bringing the products to market, one obvious limitation is that it only presents the product range in one specific way.

The weakness of the printed catalogue access method is its lacking ability to provide a specific user with all the choices the product range makes available. The reason is the single dimension available in the printed catalogue for allowing access to a given product.

In the real world most products and/or services can be categorized with a multitude of dimensions in regard to the product and/or service parameters and/or characteristics.

To accommodate the multitude of dimensions, the EC is equipped with cross-references which give the users a corresponding multitude of choices. This allows the user that does not use the "official" terminology to get pointed in the right product direction anyway. Additionally, the EC allows for multiple module associations. This means that even though the user in his product search selects a particular path in the product structure he is presented with appropritate choices that would otherwise only have been available provided a different path into the product structure of the EC had been chosen.

### Simple, full and direct search

In utilizing the EC search function any data string in the particular product reference index can be searched for. The speed of the search is at such a level that hardly any distinction is visible whether the search is conducted on a limited part of the database or the entire database as EC data are structured on the disc in a fashion that allows this search speed.

When the search button on the main interface, Fig. 4, gets activated the Search window comes up. This Search window is adaptable in 2 alternate versions, a standard and an advanced version.

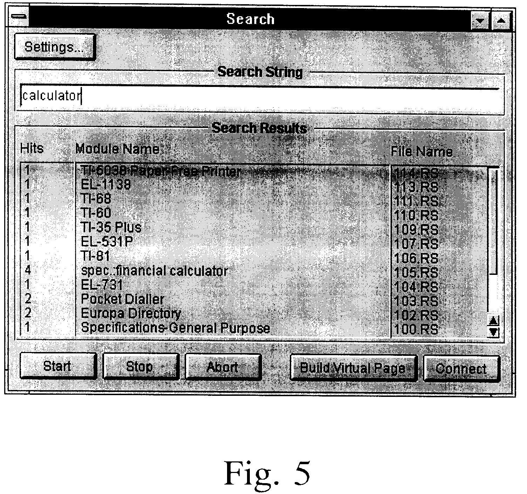

The standard Search window is shown in Fig. 5. At the window top the user can type in a given search string and push the Start button. The resulting hits are shown in the underlying part of the window. If more hits appear that can be shown in the window, the results can be scrolled by use of the scroll bar.

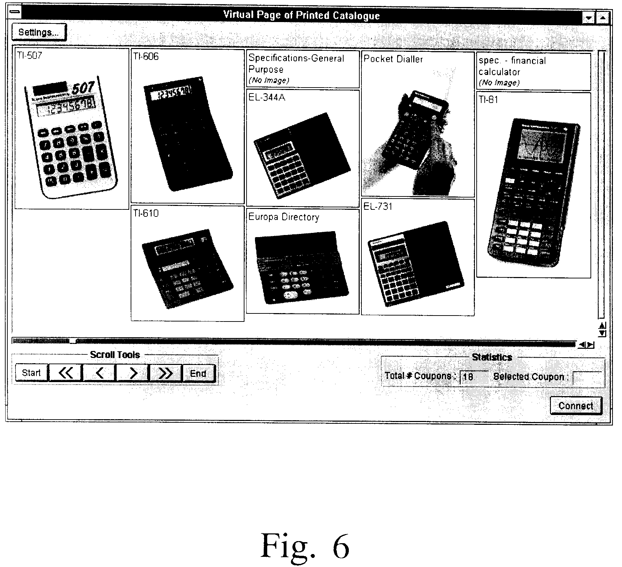

To facilitate a visual inspection of the hits as shown in Fig. 6 the user can push the Build Virtual Page™ button, the function of which is further described below.

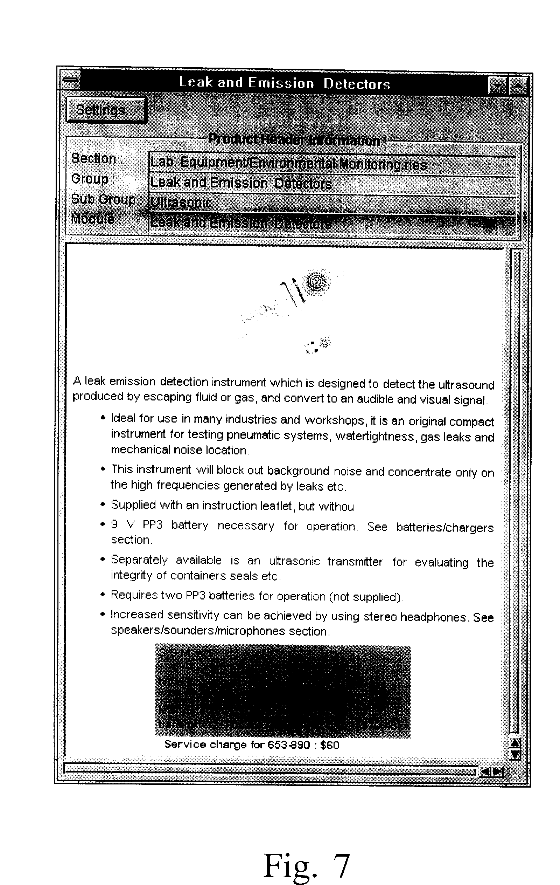

Alternatively, if only one particular product or a few among the ones found has an interest to the user, he may double click on these particular products in the list of Search Results or access it from the Virtual Page™. These products are then displayed each in a window as seen in Fig. 7.

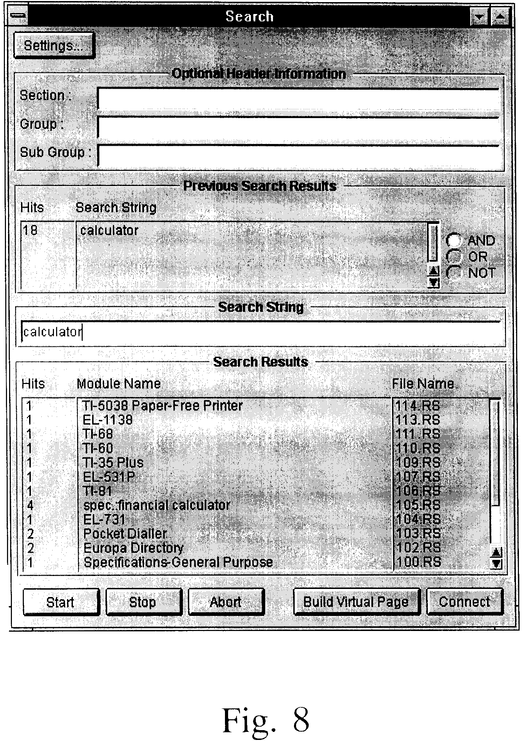

If required, an advanced version of the Search window may be made available as shown in Fig. 8. The difference between the standard and the advanced search option lies in the two elements above the Search String. The Operational Header Information allows the user to confine the search to a specific Section, Group or Subgroup. The Previous Search Result elements are usable to refine the search when too many or too few hits have been found during the first search pass and an additional search shall be conducted.

The search is limited to the description, the alpha index, the heading words, and the stock number. When a search is conducted, the system takes the user to a level in the product structure that is the highest representation of the search criteria in question.

In situations where the user wants direct access to a specific module based on knowledge of an associated stock No. both the stardard search window in Fig. 5 and the advanced search window shown in Fig. 8 may be used. However, this access is in general too inefficient. As the main product access an additional window outside the search function windows is made available to the user.

### Heading Index Access

The EC data may be accessed through a number of indexes built up in the Product Access Structure as discussed below. Accessing the data via the Heading Index resembles the method a user will use when accessing the data in a printed catalogue.

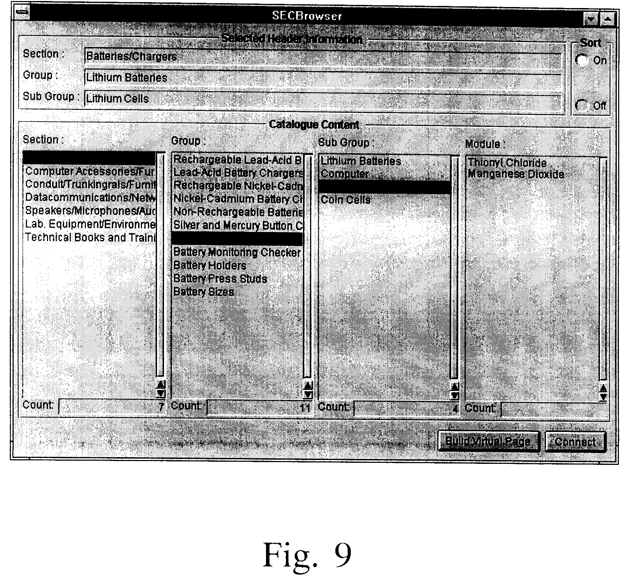

The first button on the Fig. 4 menu provides the user to obtain access to the Heading index. By pushing this button, the window shown in Fig. 9 window appears. The window gives an overview of the EC heading hierarchy structure and presents the entries of the highest hierarchy level the Section when first accessed by the user.

The user can scroll through the Section titles and select the Section he wants to look into by clicking on this Section. Following this confirmation the group entries for the chosen Section appear. Subsequently the user can click on the appropriate Group and Subgroup and in this fashion obtain a list of the lowest level modules desired. At all hierarchy levels, the listing of the level entries can be scrolled.

When the user has found the module he wants to look at, he can double click on this entry, and the module window shown in Fig. 7 appears. If the user wants to have a look at several products at the same time as shown in Fig. 6 he has the ability to push the Virtual Page™ button and get a view of the products available at the chosen hierachy level. Alternately the user may double click on a number of module entries and get these entries shown each as in Fig. 7.

As can be seen from Fig. 9, each selection made by the user at a given hierarchy level is highlighted at that level. Additionally the heading choices are shown in a header above the 4 table elements. The reason for allowing for this display is that many of the titles at each level will be truncated for space limitation reasons. The header information therefore allows for a full textual representation of the selection.

The heading data at each hierarchy level are displayed in the window shown i Fig. 9 in the preferred sequence of which it has been assigned. In some cases it might be advantageous to have the headings sorted in alphabetical order instead. Therefore a sort on/off facility is also available.

### Main Index Access

By pushing the number 2 button on the main interface window the user gets access to the Main index. The Main index contains mostly data at the module level. Basically, the data at each level of the printed catalogue hierarchy is, however, available in the Main index. A presentation of the Main index in the form of the Heading hierarchy as shown in Fig. 9 is also applicable.

### Browsing

In some cases the user just wants to browse through the EC. To enable this facility the user pushes the No. 4 button from the top of the main interface window shown in Fig. 4. This brings up the Virtual Page™ shown in Fig. 6, the functionality of which is outlined below. The product presentation starts with the first entries according to the product hierarchy.

### Specification Search

The specs call for an additional search feature to enable selection of modules that represents "nearest suitable product".

### Product Access Structure

The Product content in the EC is spun off from the source database that creates the content for both the printed catalogue and the EC. In order to ensure common understanding of the index functionality the following gives an outline of the indices dealt with in the EC.

### Main Index

Conceptually, the access to the Main Index is analogous to the printed catalogue hierarchial index access as shown in Fig. 9. The EC version of the Main Index unlike the printed catalgue gives references directly to a specific module or series of modules rather than a page No. The Main Index is a separate information source in the database. It contains entries at all levels of the hierarchial structure in regard to both section, group, subgroup and modules where modules by far represent the highest degree of consistency.

### Description Index

This index does exist partly in the source database, but is only fully developed and relevant for the EC. The data content contains a maximum of 100 character description pertaining to each of the available stock numbers of a module.

### Heading Index

The Heading Index is analogous to the hierarchy of the printed catalogue. For practical reasons certain headings are suppressed in the printed catalogue, whereas in the EC, all headings are available to the user.

### Full Text Index

In the present embodiment of the system according to the present invention, there is no full text index available since it is regarded as an inappropriate tool. Selective text indices based on the search criteria, however, are made available. In an alternative embodiment of the system according to the present invention, a full text index is available to the user.

### Stock Number Indices

The index of the Stock Numbers are built during extraction of data from the source database. In addition to the Stock Number Index, Generic and Manufacture part number index are made available.

In the product window shown in Fig. 7 the Manufacture part number is shown in the tinted panel in front of the stock number. The Manufacturers part number are not available for all modules. The Generic part number is available in the EC, but not shown in the product window.

The supplier may have a number of large resellers using their own stock No.'s. The reseller may set up a table on his hard disc in which he can enter his conversion between his own stock No.'s and the supplier's stock No.'s.

The reseller stock No.'s does not have a separate index. However, the product window shown in Fig. 7 is accessed by entering a reseller product number provided the number of digits used does not exceed the supplier's stock No. The reseller's stock No. is not shown in the product window.

### Product Display

### Individual Products

When a specific product has been selected through one of the search-and-retrieve functions specified above, the product is displayed in the product window as shown in Fig. 7.

In the top of the product window the hierarchical context of the product is shown. In the window beneath the header information the product information itself is presented.

As can be determined from Fig. 6 (specs-printing calculators) not all modules have a picture associated with it. To enhance the visual presentation both in the context of the Virtual Page™ and the individual product window special or generic pictures are made available for the purposes of display in the EC only.

The product information of the window shown in Fig. 7 contains references to products found in other sections of the catalogue. A hyperlink functionality is developed which highlights such references and forms links between the product information and the additional products found elsewhere. The hyperlink functionality enables the user by clicking on the hyperlinks to call up product windows for the linked products. In order to accomodate this functionality a tag functionality is provided which is entered in the text of the source database giving the link information between the relevant products.

Below the product information the tinted price panel with the two price breaks shown in the printed catalogue appears. The EC displays all 5 price breaks. Further, where available, the Manufacturer stock No. is shown in the tinted panel in front of the stock No.

Extra product information is accessible through special buttons. These buttons are placed on the side and at the bottom of the product window. The buttons appear in a product window only if extra product information exists for this particular product.

When the product window is displayed on the screen the system brings it up in a predefined size. By dragging the corner of the window it is, however, possible to widen and increase the size of the windows. The predefined width of the product window may be adjusted to suit the widest measure of the tinted panel when holding all of the above stated information.

If the user wants to have the largest possible view of the product information he can click on the upper window bar, thereby expanding the product window to fill the entire monitor screen. At any appearance of the prodcut window the user also has the possibility to click on the product picture itself, thereby requesting the system to display a high resolution version of the product picture provided disc space is available. This high resolution picture can be resized to any size. In fact it may be brought up so it takes up the entire size of the system monitor.

If the product data take up more space than can be shown in the predefined window size, the data can be scrolled by means of the scroll bar shown.

To further facilitate the users product viewing facilities, the product window shown in Fig. 7 functionality is enhanced to allow incremental stepping backwards and forwards of products/modules at the module level. This functionality contains two speeds, one module and five modules at a time. This approach ideally assumes that there is one ond only one location of a module in the entire product hierarchy.

### Virtual Page™

From the preceeding specification it can be determined that the Virtual Page™ as shown in Fig. 6 plays an important role in the EC.

In its most elaborate application the Virtual Page™ forms the basis of the browsing of the entire EC specified above. However, at any time when a multitude of products in any context or combination is desired to be viewed by the user in a user-selected viewing session, these products can be displayed by means of the Virtual Page™.

In its concept the Virtual Page™ draws on the strength of the product illustration database which allows the user easy visual tracking on the products which are desired. Since a key aspect of the Virtual Page™ is its ability to display a multitude of products in the same window, the product information has been truncated in the presentation of the Virtual Page™. Only the module header is shown above the module illustration in the Virtual Page™.

Once the user has formed an idea of what product he would like to analyse further before purchasing the product, the user is able to click on either of the product illustrations shown in the Virtual Page™ and bring up the individual product window described above.

When the Virtual Page™ is built initially it is brought up in a predefined size approximately taking up two thirds of the monitor area. In the cases where this window is too limited for the product presentation the user can clisk on the top window bar to allow display of the Virtual Page™ on the full monitor area. For the purposes of browsing, the Virtual Page™ has scroll tools as known from video tape recorders. Scrolling is not a continuous scroll, but a Virtual Page™-at-a-time scroll. As can be seen from Fig. 6 vertical and horizontal scroll bars are also available. The horizontal scroll bar spans the entire catalogue or the product range selected.

### Keypoints of Virtual Page™ software

* Enables the user to customize a desired selection of images and/or illustrations and associated text from the entire population of images and/or illustrations and associated text and present the customized selection on screen.
* Gives the user a quick visual overview of products and/or services which the user is investigating without at the same time being bothered with irrelevant noise from otherwise related, but in the present context of the user selection, irrelevant products and/or services.
* Provides simultaneous on screen viewing of a multitude of products and/or services and scrolling facility if all relevant products and/or services cannot be viewed in a single display or one screen window.

### Implementation of video and sound

The presentation of video shots including additional sound track further improves the functionality of the EC.

### Product Ordering

Although retrieval and presentation of product data is a prime functionality of the EC, another important aspect is the ability of the EC to place product orders once the user has found what he wants.

### Order forms

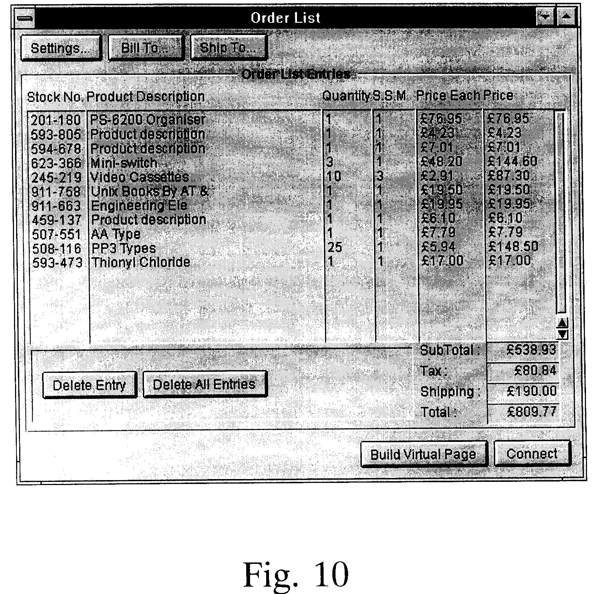

In the input/output functions of the main interface the user can access the order form in the tool bar. Access of the order form can take place at any time during the work with other functions such as the Virtual Page™ or the individual product window. When accessed the order form shown in Fig. 10 appears.

The Order form may first of all be used just as if it was an electronic type pad in which the user can type in the order entries. Much nicer, however, is the ability for the user to utilize the product information already available on the screen contained in the individual product window in placing the order. To accomodate this, the system provides a "drag-and-drop" facility that enables the user with the mouse cursor to point at a given stock number in the individual product window and drag that entity over to the order form. When this data entity is dropped in the order form the system automatically picks up the data and presents the product in an organized order entry sequence as indicated in Fig. 10.

When a particular product order entry has been "dropped" the system responds by opening a utility window that requests the user to state quantity. Tied in with this window is the display of the product price showing all available price breaks. Upon the user's entry, of the quantity the system computes the price based on the available price break structure. Further the sytem computes the subtotal, and total expense for the ordered products.

The Order form also contains a button that allows the user to state the bill-to and ship-to address. The system enables the user to specify 10 ship-to and bill-to addresses that are stored on the hard disc and recalled for later use. Additionally the system allows the user to build a Virtual Page™ of the ordered products if a final inspection is desired before terminating the order process or if at a later stage the order form is retrieved for interrogation.

Once an Order form has been completed and sent off, it is simultaneously stored in the system. Since the user is not able to write on the EC, CD-ROM, the data for the order forms are written on the system hard disc. All price information is taken from the current electronic price list and stored with the Order form information. This means that an Order form that is brought up a year later will contain the then current prices. For a discussion of price implementation see the below discussion.

To accommodate the large resellers, the Order form functionality is expanded to include the reseller stock No. in the Order form. When the reseller places an order for a product using the "drag-and-drop" facility, he only sees the original product No. in the product window. When the product is dropped in the order form, the sytem knows that a reseller table exits and looks up the reseller's stock No. and displays this alongside the original stock No. in the order form.

### Print, fax and send order

For purposes of communicating the order form from the user a number of output buttons are available. By means of these buttons the order form can either be printed at the use's site, or the order form can be faxed to the supplier. Alternatively, the user may transfer the order form via electronic data interchange (EDI) to the supplier. For purposes of the EDI communication it is conceivable that the system enables the user to interrogate the mainframe to determine whether the products ordered are in stock and can indeed be shipped the same day. Alternatively, the user may receive a return and confirmation message stating which products can be shipped and which have to be backordered. Tied in with this data exchange the supplier's mainframe obviously checks that the user has the appropriate price list installed and that his computation of product prices is valid.

Once the Order form has been activated by the user, it is placed in the background as an icon at the bottom of the display monitor. The drag-and-drop facility is still in force allowing the user to drag his suppliers stock numbers down to the icon and drop them here rather than having the Order form open for product dropping all the time. When using this facility, however, the quantity window continues to pop up and request the user to state his order quantity as an order is "dropped".

### Price Implementation

The price list is stored on the CD-ROM and contains discount breaks based on user volume. The user is able to enter his expected yearly volume. The prices subsequently reflect the volume discount.

To try to prevent "hacking" of the price data, the data are stored in encrypted form.

### General Information

Apart from the product specific information the EC offers the user additional information covering Introduction to the supplier, How to use the disc and New product information.

Preferably, access to these data are in an outer layer so as to accomplish that the user has to pass these data the first time he accesses the EC. The idea behind this approach is to encourage the user to take a look at the product offerings. In order to avoid that the user gets irritated because he feels forced to always look at the promotion before getting access to the real data, an escape facility is implemented allowing "would-be-annoyed" users to bypass the product hype.

### Extra Product Information

As discussed earlier there is a desire in conjunction with presentation of individual products to provide the user with access to extra product information such as data sheets and technical notes. Access to such information is generated through buttons on the product window.

### Electronic Catalogue, How to

The assistance of the user in the usage of the EC takes two forms.

The first user assistance is an automatic presentation of the functionality of the EC involving animated database look-ups for all window functions available. This also includes an animated placing of an order. The automated tutorial is presented with text pinpointig the functionality and is able to be stopped at any sequence at the discretion of the user. The automated tutorial of the EC functionality gives the user a reasonable familiarity prior to working with the EC itself.

When working with the EC itself each window has a "help" push button from which textual information can be accessed to explain the functionality of the given window and its relationship to other functions in the EC.

### New Product Overview

New products are typically flagged in the source database for output in the printed catalogue. The EC takes advantage of the same capability and when bringing up the Virtual Page™ overlay the product images for the new products with a blinking icon "new". This is one way of highlighting new products. For all the new products that have self-running presentations then the flashing "new" is also used as a button that ties back to the sound track explanation of the key features in the new products from the new product overview section.

Apart from the above functionality at the database level the user is as indicated earlier given access to the new product information from the outer information layer. Following this choice the user is presented with an overview of the available subjects as stated in the specification. Since each of the subjects holds approximately 20 products, this presentation is foreseen to be utilizing the Virtual Page™ having this window brought up using the full screen size. Once the subject has been brought to the monitor screen the system starts the voice introduction of the first product and continues through the sequence of products if not interrupted by the user. At any time the presentation may be interrupted by the user by pointing to a different desired product within the 20 products presented.

By clicking on a given product twice, the individual product window is brought up so that the user can review the prodcut details, and at the same time the requested series of selling points are presented on the screen next to the product window.

### Data

The EC as stated above has a number of advantages and major differences compared to the printed counterpart. These include advanced search facilities, browsing and the use of hyperlink struktures.

Put in other words the electronic catalogue lets the user work on a higher level of abstraction. In order to do so the underlying data structure must support this higher level.

A current Oracle database has been created and maintained according to the printed appearance of the catalogue. In order to gain the full benefit from the electronic approach, parts of the data structure should be expanded to accomodate the new requirements. This logical view must support data relations enabling advanced hyperlink and cross-reference browsing. The principle in the usage of the new database structure is shown in Fig. 1. In Fig. 1, items 11, 12 and 13 model the database.

As can be seen the database structure accomodates the publication of both types of catalogues. Each type has a shared data content, item 12, and each an individual data content, item 11 and 13, respectively.

The aspects of this database demand will be examined in detail below.

### Data suitability

The discussion of data suitability is split into two parts:
* The logical structure of the database
* The appearance of the data itself

It is to be stressed that this discussion is intended to clarify the data suitability issue and is not a list of mandatory changes.

### The logical structure of the database

The Oracle database is organized in a hierarchical fashion supporting Sections, Groups, Subgroups, modules and elements. Each of these levels is maintained with information needed explicitly in the printed catalogue. Information not needed is not maintained. This is exactly the major difference between the printed catalogue and the EC. When producing the printed version, the structure of the individual page is known. This is *not* the case with the electronic version. The virtual pages shown are a result of a user-specified selection and do not reflect a physical page in the printed catalogue.

The following overview will address the structural demands of an efficient EC:

### Heading maintenance

Depending on the physical layout of the printed catalogue some headings are not maintained but rather suppressed. This is fully valid and is done in order to save space in the printed catalogue.

Estimated counts suggests that approx. 4,000 headings are marked as suppressed in the source database today. For EC purposes these headings need to be maintained and extracted. However, the maintenance of these headings does not affect the suppression in the printed catalogue.

### Module relations

Throughout the printed catalogue module relations suggest alternatives and supplementary choices to the user. A related module is in some cases associated with the previous module. The related module itself contains a reference identified by a stock number. This is at a later stage in the production of the printed catalogue evaluated and turned into a page number in the related module.

In the EC it does not make any sense to refer to a page since the EC is not page-oriented. Rather it is useful to refer to a Section, a Group or a specific Module. In other words, a more differentiated and precise way of specifying a relation is needed.

Based on these considerations, the structure of the source database is expanded to enable:
* The explicit specification of the relation between a given module and its relations.
* The tagging of the relation. Based on this the EC is able to act in an intelligent manner on the different relation types.
* All modules to have a unique type.

Having introduced this differentiation in the source database, the EC gains the following benefits:
* When displaying an individual product window, the modules with a relation attached to it have a hyperlink word/button. The related module still seen in the printed version is of course not affected by this change. If this hyperlink word is pushed, the related information is displayed.
* The Virtual Pages only holds real modules. Related modules, additional information etc. are hidden.

### Connected modules

Seen on a printed page, the visual layout of closely associated modules gives in itself information on the interconnection between them. The typical situation is the display of a module containing additional information for one or more products displayed nearby. This obvious visual relation is not reflected in the current data model.
* For a given module it is possible to explicitly specify the connection to another module which could hold additional information.

This improves the EC by means of:
* A hyperlink button available on the modules relating to other modules. Seen in the EC there is no distinction between the hyperlink functinality concerning related and connected modules. If a given module both has a relation and a reference to additional information, then two or more hyperlinks appear in the product window.
* Because of the tagging of modules mentioned above, the virtual page contains no modules with pure additional information.

The additional information is typically:
* A table listing characteristics of a number of related products.
* An illustration common to a number of products.

### Enclosure 1

### Estimation of Space Requirements for Additional Technical Information for the Catalogue on CD-ROM

It is important to note that the performance of any compression scheme depends greatlyon the data to which it is applied. The compression factors stated below should therefore not be interpreted as guaranteed facts but merely as rules of thumb.

### Data Library

| | |
|---|---|
| 3190 text pages (10K bytes PostScript code pr. page) | 32 MBytes |
| 4000 illustrations (20K PostScript code each) | 80 MBytes |
| 1500 graphs (20K PostScript code each) | 30 Mbytes |
| 700 half tones (100 K binary data each) | 70 Mbytes |
| Total (without compression) | 212 Mbytes |

It is assumed that the 4000 illustrations and 1500 graphs are stored as high level PostScript commands, i.e. not bitmaps.

Text can normally be compressed by a factor of 2:1, and half tone image data can normally be compressed by a factor of 3:1.

| | |
|---|---|
| Compressed PostScript text (142 MBytes/2) | 71 Mbytes |
| Compressed half tones (70 MBytes/3) | 25 MBytes |
| Total (compressed) | 96 MBytes |

### Instruction Leaflets

| | |
|---|---|
| 2000 text pages (15K PostScript code each) | 30 MBytes |
| 2000 illustration (20K PostScript code each | 40 MBytes |
| Total (without compression) | 70 MBytes |
| | |
| Total (compressed) | 35 MBytes |

It is assumed that the 2000 illustrations are stored as high level PostScript commands, i.e. not bitmaps.

### Health and Safety Sheets

| | |
|---|---|
| 1885 pages of ASCII text (4K text each, no compression) | 8 MBytes |
| | |
| Total (compressed) | 4 MBytes |

| | |
|---|---|
| 11039 (7936+3103) lowres logos (5K bytes JPEG compressed) | 55 MBytes |
| 3299 lowres line drawings (7K bytes LZW compressed) | 23 MBytes |
| 3299 highres line drawings (30K bytes LZW compressed) | 99 MBytes |
| Total (compressed) | 177 MBytes |

All line drawings are stored as highres images where the area of each image is approximately five times larger than the lowres version. High resolution versions of the color images are not included. Each high resolution color image added to the system requires approximately 30 KBytes disc space.

### Space Requirements for Product Descriptions

| | |
|---|---|
| 11895 product descriptions (5K text) | 60 MBytes |
| Full-text index (60% of text size) | 36 MBytes |
| Additional indexes | 20 MBytes |
| Total (without compression | 116 MBytes |

The text descriptions can be compressed by a factor of 2:1.

| | |
|---|---|
| Product descriptions (compressed 2:1) | 30 MBytes |
| Indexes | 56 MBytes |
| Total (compressed) | 86 MBytes |

### Space Requirements for Prices Information

| | |
|---|---|
| 44047 descriptions (100 character) | 4,4 MBytes |
| 44047 price structures (5 prices, break points etc: 36 bytes) | 1,6 MBytes |
| Total (without compression | 6,0 MBytes |

The text descriptions can be compressed and stored in variable length records, and the price structures can be packed.

| | |
|---|---|
| 44047 descriptions (compressed) | 2,5 MBytes |
| 44047 Price structures (packed) | 1,0 MBytes |
| Total (compressed) | 3,5 MBytes |

Additional price tables (e.g. discount schemes) requires approximately 1 MByte each.

### Space Requirements for Information System

| | |
|---|---|
| Help information | 15 MBytes |
| New product information | 15 MBytes |
| Total | 30 MBytes |

### Total Space Requirements for Catalogue Data for CD-ROM

| | |
|---|---|
| Logos and line drawings | 986 MBytes |
| Product descriptions | 116 MBytes |
| Price information | 6 MBytes |
| Information system | 30 MBytes |
| Total (without compression) | 1138 MBytes |

| | |
|---|---|
| Logos and line drawings | 177 MBytes |
| Product descriptions | 86 MBytes |
| Price information | 4 MBytes |
| Information system | 30 MBytes |
| Total (compressed) | 297 MBytes |

### Total Space Requirements for Electronic Catalogue on CD-ROM

| | |
|---|---|
| Catalogue data | 1138 MBytes |
| Additional technical information | 1082 MBytes |
| Total (without compression) | 220 MBytes |

2220 MBytes is equal to 3½ CD's.

| | |
|---|---|
| Catalogue data | 297 MBytes |
| Additional technical information | 234-293 MBytes |
| Total (compressed) | 531-590 MBytes |

The figure below illustrates how the space on a CD-ROM is used. The total space on the CD is 650 MBytes are used.

## Claims

1. A computerized image displaying system, comprising:
i. a data carrying medium including first data representing a plurality of images and associated data, and second data identifying said plurality of images and associated data and including cross-reference data,
ii. reader means for receiving said data carrying medium and for reading said first and second data therefrom,
iii. a display means for displaying images and associated data, and
iv. a processor means communicating with said reader means and said displaying means and including a user operable control means allowing said user to control the displaying of said images and associated data generated from said first data input from said data carrying medium to said processor means by means of said reader means and output to said displaying means for displaying thereon and to organize the displaying of said images and associated data in a sequence including a set of images and associated data among said plurality of images and associated data, said set of images and associated data of said sequence being identified through said cross-reference data of said second data input from said data carrying medium to said processor means by means of said reader means.

2. The computerized image displaying system according to Claim 1, said processor means further comprising a storage means for storing said first and second data input to said processor means from said data carrying medium by means of said reader means.

3. The computerized image displaying system according to any of the Claims 1 or 2, said processor means being constituted by a personal computer comprising a central processing unit (CPU) and a keyboard and/or a mouse constituting said user operable control means.

4. The computerized image displaying system according to any of the Claims 1-3, further comprising sound generating means, said first data further representing sounds to be generated by said sound generating means, and said processor means communicating with said sound generating means for causing said sound generating means to generate sounds from said first data in correspondence with the displaying of said set of images and associated data of said sequence.

5. The computerized image displaying system according to any of the Claims 1-4, said data carrying medium being an optical readable data carrying medium or a magnetic data storing medium such as a laser disc, a compact disc, a magnetic hard disc or a magnetic tape, respectively, or a combination thereof.

6. The computerized image displaying system according to Claim 5, said reader means being constituted by a compact disc reader, a laser disc reader, a magnetic hard disc reader, or a magnetic tape station such as a video tape station or a combination thereof.

7. The computerized image displaying system according to any of the Claims 1-6, said displaying means being constituted by a computer screen or a video display unit such as a LCD screen (Liquid Crystal Display) or a CRT (Cathode Ray Tube) of a computer or a video or TV set.

8. A data carrying medium for use in a computerized image displaying system,
said data carrying medium including first data representing a plurality of images and associated data, and second data identifying said plurality of images and associated data and including cross-reference data,
said computerized image displaying system comprising:
i. reader means for receiving said data carrying medium and for reading said first and second data therefrom,
ii. a display means for displaying images and associated data, and
iii. a processor means communicating with said reader means and said displaying means and including a user operable control means allowing said user to control the displaying of said images and associated data generated from said first data input from said data carrying medium to said processor means by means of said reader means and output to said displaying means for displaying thereon and to organize the displaying of said images and associated data in a sequence including a set of images and associated data among said plurality of images and associated data, said set of images and associated data of said sequence being identified through said cross-reference data of said second data input from said data carrying medium to said processor means by means of said reader means.

9. The data carrying medium according to Claim 8, said computerized image displaying system having any of the characteristics of the computerized image displaying system according to any of the Claims 1-7.

10. The data carrying medium according to any of the Claims 8-9, said data carrying medium being an optical readable data carrying medium or a magnetic data storing medium such as a laser disc, a compact disc, a hard disc or a magnetic tape, respectively, or a combination thereof.

11. A method of displaying images, comprising:
providing a data carrying medium including first data representing a plurality of images and associated data, and second data identifying said plurality of images and associated data and including cross-reference data,
providing a computerized image displaying system comprising:
i. reader means for receiving said data carrying medium and for reading said first and second data therefrom,
ii. a display means for displaying images and associated data, and
iii. a processor means communicating with said reader means and said displaying means and including a user operable control means,
inputting said data carrying medium into said reader means,
reading said first and second data from said data carrying medium,
inputting said first and second data into said processor means, and
controlling the displaying of said images and associated data generated from said first data input from said data carrying medium and output to said displaying means for displaying thereon by organizing the displaying of said images and associated data in a sequence including a set of images and associated data among said plurality of images and associated data, said set of images and associated data of said sequence being identified through said cross-reference data of said second data input from said data carrying medium to said processor means by means of said reader means.

12. The method according to Claim 11, said computerized image displaying further having any of the characteristics of the computerized image displaying system according to any of the Claims 1-7.

13. The method according to any of the Claims 11 or 12, said data carrying medium further having any of the characteristics of the data carrying medium according to any of the Claims 8-10.
